# FASCICULE DE BREVET EUROPEEN

(11) **EP 0 439 380 B1**
(45) Date de publication et mention de la délivrance du brevet: **03.11.1993**
(21) Numéro de dépôt: 91400045.0
(22) Date de dépôt: 11.01.1991
(51) Int. Cl.: B60J 7/22

(54) **Ressort de rappel, notamment pour un déflecteur du vent sur un toit de véhicule automobile**
Rückzugsfeder, insbesondere für einen Windabweiser auf einem Kraftfahrzeugdach
Release spring, especially for wind reflector on vehicle roof

(30) Priorité: 25.01.1990 FR 9000859
(43) Date de publication de la demande: 31.07.1991
(73) Titulaire: FRANCE DESIGN, F-79140 Le Pin (FR)
(72) Inventeur: Cheron, Christian, F-49000 Angers (FR); de Gaillard, François, F-85390 Mouilleron en Pareds (FR)
(74) Mandataire: Rodhain, Claude

(56) Documents cités:
- EP-A- 0 140 491
- FR-A- 2 564 787

## Description

L'invention concerne un ressort de rappel, du type ressort à lame ou analogue, notamment pour un déflecteur du vent sur un toit de véhicule automobile.

De façon connue, un déflecteur du vent sur le toit d'un véhicule dans lequel est formée une ouverture fermable par un panneau mobile, se compose d'un profilé de guidage des filets d'air articulé dans un châssis par l'intermédiaire de deux bras pivotant autour d'un axe. Une force de relèvement du profilé de guidage vers l'extérieur de l'habitacle du véhicule est exercée par deux ressorts de rappel du type ressort à lame, de manière que le profilé dévie les filets d'air au-dessus de l'ouverture lorsque le panneau mobile dégage partiellement ou complètement l'ouverture dans le toit.

Les ressorts de rappel, de façon connue, sont fixés de préférence par une de leurs extrémités, respectivement sur chaque bras du déflecteur et prennent appui par l'autre extrémité sur le châssis. Ils assurent ainsi une fonction unique de contrainte pour le relèvement du déflecteur du vent.

Par ailleurs, l'axe de pivotement des bras du déflecteur est maintenu en position habituellement par des pièces rapportées fixées sur le châssis, ou par emboîtement dans une partie creuse correspondante ménagée dans l'épaisseur du châssis.

En outre, dans le cas d'un dispositif d'ouverture de toit permettant la position entrebâillée et escamotée du panneau mobile, il est nécessaire de bloquer le mouvement en translation du panneau mobile lorsque celui-ci est en position entrebâillée. Il est connu d'utiliser à cet effet un crochet de sécurité du type à levier monté sur le support du panneau mobile et coopérant avec une butée formée par exemple par découpe ou moulage dans le châssis.

De façon générale, les dispositifs d'ouverture de toit équipés d'un déflecteur du vent comportent des pièces différentes pour assurer les fonctions ci-dessus énumérées. Du fait de la spécificité de chaque pièce et de son agencement dans le dispositif d'ouverture de toit, l'assemblage de celles-ci est long, donc coûteux.

L'objectif de l'invention est de pallier ces différents problèmes et notamment de réduire le nombre de pièces nécessaires au maintien en position du déflecteur du vent et au blocage du crochet de sécurité.

Il est connu que les risques de mauvais fonctionnement d'un assemblage augmentent avec le nombre de pièces à assembler. Il est donc avantageux, dans un mécanisme d'ouverture de toit, de diminuer le nombre de pièces le constituant en regroupant sur un seul élément une pluralité de fonctions antérieurement assurées par des organes différents et placés à distance. En réduisant le nombre de pièces du mécanisme, on augmente d'autant la simplicité, les performances et la fiabilité du mécanisme.

Ces différents objectifs sont atteints à l'aide d'un ressort de rappel du type ressort à lame ou analogue, notamment pour un déflecteur du vent sur un toit de véhicule automobile qui présente une ouverture que peut fermer un pavillon mobile articulé monté sur un support coulissant dans un châssis, ledit support portant une pièce de blocage pour bloquer son mouvement en translation dans le châssis, ledit déflecteur comprenant au moins un bras articulé autour d'un axe, caractérisé en ce que le ressort de rappel comporte une première portion élastique s'étendant dans la direction longitudinale du bras et présentant une première extrémité libre attaquant le bras et une seconde extrémité appuyée sur le châssis, une seconde portion prolongeant la seconde extrémité comprenant un chapeau de palier pour maintenir l'axe du bras sur le châssis et une troisième portion conformée pour coopérer avec ladite pièce de blocage.

Selon une autre caractéristique de l'invention, la troisième portion prolonge la seconde portion et comporte une extrémité libre faisant saillie pour fournir une butée à la pièce de blocage.

Selon encore une autre caractéristique de l'invention, la troisième portion est constituée par une paroi du chapeau de palier.

D'autres caractéristiques et avantages de l'invention apparaîtront encore plus clairement à la lecture de la description qui va suivre et des dessins annexés dans lesquels :
- la figure 1 représente une vue en coupe longitudinale du ressort de rappel selon l'invention,
- la figure 2 représente une vue de dessus du ressort de rappel selon l'invention,
- la figure 3 représente une vue partielle en coupe longitudinale du deuxième mode de réalisation du ressort de rappel selon l'invention.

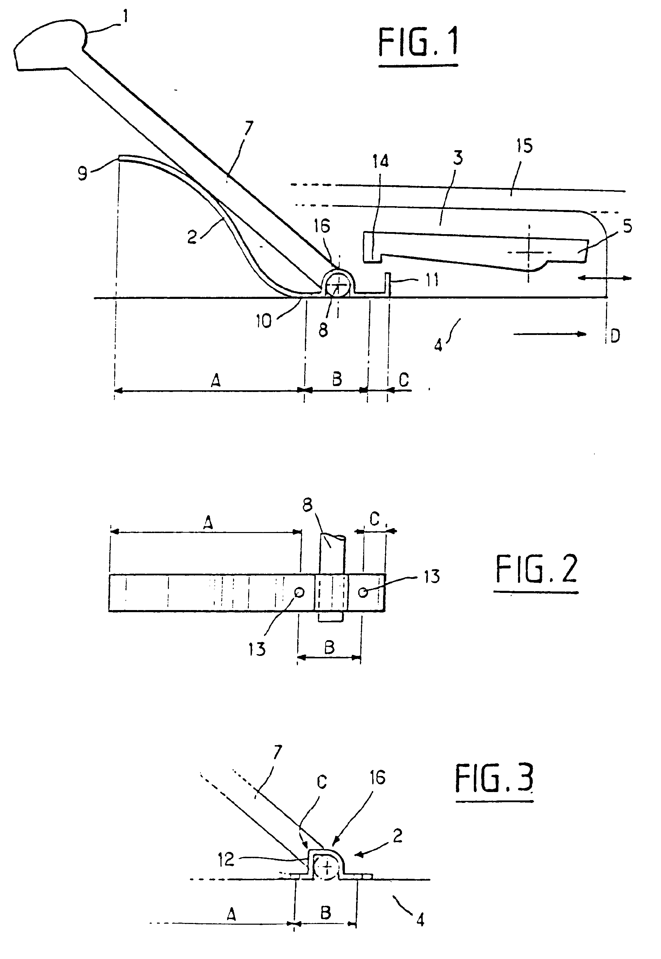

On a représenté sur la figure 1, en coupe longitudinale une partie d'un dispositif d'ouverture de toit d'un véhicule automobile équipée d'un déflecteur 1 du vent sur le toit qui présente une ouverture que peut fermer un panneau mobile 15 articulé monté sur un support 3 coulissant dans un châssis 4 par le biais d'organes de roulement ou analogues.

De façon connue, le déflecteur 1 est placé à l'avant de l'ouverture. Le déflecteur 1 comporte deux bras 7 placés de part et d'autre d'un profilé aérodynamique et montés à rotation autour d'un axe 8. Pour faire basculer le déflecteur 1 vers l'extérieur de l'habitacle du véhicule, lorsque l'ouverture est dégagée notamment par le coulissement du panneau mobile par-dessous ou par-dessus le toit, on prévoit deux ressorts de rappel 2 associés à chaque bras 7 et comportant une première portion élastique A dont l'extrémité libre 9 attaque le bras 7 et l'autre extrémité 10 prend appui sur le châssis 4.

La seconde extrémité 10 de la première portion A est prolongée par une seconde portion B comprenant un chapeau de palier 16 en forme de U renversé coopérant avec une surface plane du châssis 4 pour constituer un palier pour l'axe 8 d'articulation du bras 7 du déflecteur. De façon préférentielle, les portions A et B du ressort de rappel 2 sont constituées par une lame élastique moulée ou un fil rigide à enroulement, l'enroulement du fil constituant un moyeu pour l'axe 8 du bras du déflecteur.

Le support 3 porte un crochet de sécurité 5 comportant un levier muni d'un doigt de blocage 14. Le ressort de rappel 2 selon l'invention comporte une troisième portion C prolongeant la deuxième portion B. La troisième portion C présente une butée 11 pour le doigt de blocage 14 constitué par la seconde extrémité libre du ressort de rappel 2 faisant saillie à angle droit. Le crochet de sécurité 5 est placé sur le support 3 du panneau mobile 15 de manière que lorsque ce dernier est en position entrebâillée, le doigt 14 du levier du crochet de sécurité 5 vient se placer devant la butée 11 bloquant ainsi le mouvement en translation vers l'arrière dans la direction de la flèche D du support 3 du panneau mobile 15.

Comme visible sur la figure 2, les trois portions A, B, C sont contiguës et constituent une seule pièce que l'on fixe de préférence au châssis 4 de manière démontable ou non par l'intermédiaire de fixations 13 réparties ou non de part et d'autre de la seconde portion B.

Selon un autre mode de réalisation de l'invention, la troisième portion C est constituée par une paroi 12 du chapeau de palier 16 de la seconde portion B. Comme visible en figure 3, la paroi 12 est constituée par la surface délimitée par la branche du U prolongeant la première portion A. La paroi 12 constitue ainsi une zone d'appui coopérant avec une surface complémentaire du doigt 14 du crochet de sécurité 5.

## Revendications

1. Ressort de rappel, du type ressort à lame ou analogue, notamment pour un déflecteur (1) du vent sur un toit de véhicule automobile qui présente une ouverture que peut fermer un panneau mobile articulé, monté sur un support (3) coulissant dans un châssis (4), ledit support (3) portant une pièce de blocage (5) pour bloquer son mouvement en translation dans le châssis, ledit déflecteur comprenant au moins un bras (7) articulé autour d'un axe (8), caractérisé en ce que le ressort de rappel comporte une première portion élastique (A) s'étendant dans la direction longitudinalement du bras (7) et présentant une première extrémité libre (9) attaquant le bras (7) et une seconde extrémité (10) appuyée sur le châssis (4), une seconde portion (B) prolongeant la seconde extrémité (10) et comprenant un chapeau de palier (16) pour maintenir en position l'axe (8) du bras sur le châssis (4) et une troisième portion (C) conformée pour coopérer avec ladite pièce de blocage (5).

2. Ressort de rappel selon la revendication 1, caractérisé en ce que ladite troisième portion (C) prolonge la seconde portion (B) et comporte une extrémité libre (11) faisant saillie pour fournir une butée à la pièce de blocage (5).

3. Ressort de rappel selon la revendication 1, caractérisé en ce que ladite troisième portion (C) est constituée par une paroi (12) du chapeau de palier (16).

4. Ressort de rappel selon l'une quelconque des revendications précédentes, caractérisé en ce que lesdites seconde et troisième portions (B, C) sont contiguës à la première portion (A) pour former une seule pièce.

5. Dispositif d'ouverture de toit de véhicule automobile équipé d'un déflecteur du vent utilisant au moins un ressort de rappel selon l'une quelconque des revendications précédentes.

## Patentansprüche

1. Rückzugsfeder in Form einer Blattfeder oder dergleichen, insbesondere für einen Windabweiser (1) auf einem Kraftfahrzeugdach, das eine Öffnung aufweist, die von einer auf einem Auflager (3) in einem Rahmen (4) verschiebbaren, beweglichen, angelenkten Platte verschließbar ist, wobei das Auflager (3) zum Blockieren seiner Verschiebebewegung auf dem Rahmen mit einem Verriegelungsteil (5) versehen ist, wobei der Windabweiser wenigstens einen um eine Achse (8) angelenkten Arm (7) umfaßt, dadurch gekennzeichnet, daß die Rückzugsfeder besteht aus einem ersten elastischen Abschnitt (A), der sich in Längsrichtung des Arms (7) erstreckt und ein an dem Arm (7) angreifendes erstes freies Ende (9) und ein auf dem Rahmen (4) abgestütztes zweites Ende (10) aufweist, aus einem das zweite Ende (10) verlängernden zweiten Abschnitt (B), der einen Lagerdeckel (16) zur Festlegung der Achse (8) des Arms auf dem Rahmen (4) umfaßt, und aus einem zum Zusammenwirken mit dem Verriegelungsteil (5) entsprechend geformten dritten Abschnitt (C).

2. Rückzugsfeder gemäß Anspruch 1, dadurch gekennzeichnet, daß der dritte Abschnitt (C) in Verlängerung des zweiten Abschnitts (B) ein zur Bildung eines Anschlags für das Verriegelungsteil (5) vorspringendes freies Ende (11) umfaßt.

3. Rückzugsfeder gemäß Anspruch 1, dadurch gekennzeichnet, daß der dritte Abschnitt (C) von einer Wand (12) des Lagerdeckels (16) gebildet wird.

4. Rückzugsfeder gemäß einem der vorhergehenden Ansprüche, dadurch gekennzeichnet, daß der zweite und der dritte Abschnitt (B, C) an den ersten Abschnitt (A) einstückig angrenzen.

5. Öffnungsvorrichtung für ein mit einem Windabweiser versehenes Kraftfahrzeugdach, wobei wenigstens eine Rückzugsfeder gemäß einem der vorhergehenden Ansprüche benutzt wird.

## Claims

1. A return spring, of the plate-spring type or the like, in particular for a wind deflector (1) on a motor vehicle roof which has an aperture that can be closed by a hinged movable panel mounted on a support (3) sliding in a frame (4), the said support (3) bearing a locking part (5) for blocking its movement in translation in the frame, said deflector comprising at least one arm (7) hinged about an axis (8), characterised in that the return spring comprises a first flexible portion (A) extending in the longitudinal direction of the arm (7) and having a first free end (9) acting on the arm (7) and a second end (10) rested on the frame (40), a second portion (B) extending the second end (10) and comprising a bearing cap (16) for holding the axis (8) of the arm in position on the frame (14), and a third portion (C) shaped to co-operate with the said locking part (5).

2. A return spring according to Claim 1, characterised in that the said third portion (C) extends the second portion (B) and comprises a free end (11) jutting out in order to provide a stop for the locking part (5).

3. A return spring according to Claim 1, characterised in that the said third portion (C) is composed of a wall (12) of the bearing cap (16).

4. A return spring according to any one of the preceding claims, characterised in that the second and third portions (B, C) are contiguous to the first portion (A) in order to form a single part.

5. A device for opening a motor vehicle roof equipped with a wind deflector using at least one return spring according to any one of the preceding claims.
